# EUROPEAN PATENT APPLICATION

(11) **EP 4 156 172 A1**
(43) Date of publication of application: **29.03.2023**
(21) Application number: 21198931.4
(22) Date of filing: 24.09.2021
(51) Int. Cl.: G10K 11/168, B32B 5/00, B60R 13/08

(54) **OUTER FLOOR INSULATOR FOR BATTERY ELECTRIC VEHICLE**

(71) Applicant: Autoneum Management AG, 8406 Winterthur (CH)
(72) Inventor: Kossanyi, Mathias, 75010 Paris (FR); Caprioli, Davide, 8400 Winterthur (CH); Mazzarella, Luca, 8400 Winterthur (CH)

(57) **Abstract**

An outer floor insulator for filling the gap between the outer floor surface and the battery box of a battery electric vehicle comprising at least a polyurethane foam layer characterised in that it further comprises at least 2 foil layers, whereby the foam layer is an injected foam sandwiched between and materially connected to the foil layers and formed in a 3D shape with a variable area weight and thickness

## Description

### Technical Field

The invention relates to a structure of an electric or hybrid vehicle comprising a floor, a battery container secured beneath the floor and an outer floor insulator arranged between the battery container and the floor. It also relates to a vehicle comprising such a structure and a method of production of the outer floor insulator.

### Background Art

Electric cars are driving on energy coming from large battery packs that might be stored underneath the main floor construction, also known as the body-in-white, of mainly the passenger compartment. These battery packs are in general large steel or metal boxes with a lid of the same material.

The box, and in particularly the lid, are not designed flat but might have ribs or beams to further increase the sturdiness of the box. To prevent vibrational noise transferring from the surface of the lid or cover to the flooring structure, the battery box is mounted with a dedicated gap between the surface of the cover or lid and the surface of the flooring structure, which can be between 5 - 35 mm on average.

As the gap between the battery box lid and the floor construction is at the exterior of the vehicle, water and dirt might enter the gap space causing problems. Noises may be passed via the gap from the surrounding area as well as from the battery box to the passenger compartment and cold air may influence the temperature inside the passenger compartment. Hence there is a need for closing this gap area at least partially, this can be done with an outer floor insulator or gap filler part (both words mean the same part in the context of this application).

For instance, US2008/136110 is describing a sound insulation system between the floor of the vehicle and the battery box, whereby a seal is placed at the rim to prevent the transmission of acoustic noise in the empty space sealed. This is preventing any air draft through the gap or intrusion of water and dirt, but is not effective against any noise coming from the battery box and its content.

For instance WO2020136021 discloses a state of the art structure for closing the gap or space between the floor construction and the battery box consisting of a compressed foam plate, whereby the foam plate is of constant thickness and placed between the vehicle floorplate and the battery lid in a compressed state with a compression of between 20 and 40% of the uncompressed state. The foam plate is made of a slab foam with a constant thickness and area weight, and may have a foam density of between 20 and 100 g/L.

Although the overall space between the floor structure and the battery lid surfaces are between 5 and 35 mm in distance on average there are areas where the space maybe only 2 -3mm in distance. Furthermore, the overall surface to be covered may be larger than 1m². State of the art parts made of a single layer material with a constant thickness showed unexpected problems. The outer floor insulator or gap filler part is generally first mounted or laid on the battery box cover surface that will face the passenger compartment, and then the box including the outer floor insulator is mounted underneath the car.

As the slab foam used in the state of the car is compressed 20-40% in general, an increased force is needed to mount the box with the foam layer. Surprisingly the force needed to mount the compressed slab of foam is too much and causing a deforming of the battery lid. Any dent or damage to the battery box jeopardizes the battery integrity, and is deemed a safety risk.

Hence, there is a need for an outer floor insulator or gap filler between the outer floor surface and the battery lid surface that is able to close the gap without damaging the battery lid or create any other damage to either the floor structure or the battery lid structure, and that still fulfils the acoustic, mechanical and thermal requirements of the part.

### Summary of invention

This goal is achieved by the outer floor insulator for filling the gap between the outer floor surface and the battery box of a battery electric vehicle comprising at least a foam layer according to claim 1 as well as by the vehicle comprising such an outer floor insulator according to claim 14 and by the method of producing the floor insulator according to the invention.

In particular, by using injected foam sandwiched between and materially connected to 2 foil layers, and formed in a 3D shape with a variable area weight and thickness, it is possible to reduce the maximum force during mounting while maintaining an even compression within the part as mounted. Furthermore, it is possible to reduce the compressional force in defined areas to further minimise damage of the underlying surfaces, in particular the lid of the battery. Due to using the injected foam it is also possible to reduce the overall weight of the part.

Surprisingly, by using injected foam sandwiched between 2 foil layers it is possible to create a large thin part that is stable to handle during the production, transport and mounting processes, solving the problems of the state of the art parts. In particular, by reducing and/or fine-tuning the compressional force needed to mount the part the risk of damaging the contacting surface of the battery cover could be eliminated.

Preferably, a soft polyurethane foam with a low compression stress, preferably with a CLD40 of between 2.5 and 4.3kPa, is used to further reduce the force needed for the mounting of the battery box including the outer floor insulator underneath the floor construction.

For instance, a soft polyurethane foam made at a low isocyanate index may be used, to reduce further the force needed for the mounting of the battery box including the outer floor insulator underneath the floor construction. The isocyanate index ranges between 45 and 55, preferably between 48 and 53.

The polyurethane foam is derived from mixing a polyol blend and an isocyanate. The polyol blend consists of base polyols of different molecular weight between 500 and 8000 g/mol, preferably between 4500 and 6000 g/mol or alternatively between 4500 and 6000 combine with a molecular weight of between 600 to 800 g/mol, additives like catalysts, surfactants, cell openers, colorants, compatibilizers, cross linkers, aldehyde scavengers, other emission control additives and up to 6% water. The base polyol can be polyether or polyester type polyols.

The Isocyanate Index is defined as the ratio of the equivalent amount of isocyanate used relative to the theoretical equivalent amount times 100. In principle, equivalent amount is equal to one equivalent isocyanate per one equivalent B-side compounds (polyol blend); this is an index of 100. The Isocyanate Index = (Actual Amount of Isocyanate/Theoretical Amount of Isocyanate) times 100. Alternatively, to state it differently: for Index 100, there is one functional group in the isocyanate for each functional (isocyanate reactive) group in the polyol blend.

Preferably, the density of the injected foam is between 35 and 65 kg/m³, preferably between 42-46 kg/m³ for the main area of the part. Whereby areas highly with a minimal height for instance at the connection at the periphery or some small areas have a higher density due to reduced foaming of the mixture.

The injected foam after curing preferably has a compressional stress value (CV₂₅) at 25% compression between 1 and 5kPa measured at first cycle, preferably between 1.5 and 4KPa as measured according to ISO 3386-1.

Preferably, the foam has a compressional stress value (CV₅₀) at 50% compression of less than 5.3kPa as measured according to ISO 3386.1 at fifth cycle.

Preferably, the foam has a CV₂₅ at first cycle of between 2 and 2.5kPa and a CV₅₀ at 5^{th} cycle of between 3 and 3.5kPa measured according to ISO 3386.1.

The foil layers is at least one chosen from the group of polyurethane, polyolefin or polyamide based foils. Foils may be single layer or multilayer foils. Preferable a polyurethane foil is used, to obtain an optimal forming of the 3D shape. Foil layers may be treated to obtain a better bonding with the injected foam during the foaming process.

Preferably the foil has a thickness of between 20 and 200µm. Preferable with a thickness of between 30 and 50µm.

The first and second foil might be the same or of different material and or thickness.

Method of producing the outer floor insulator or gap filler according to the invention having at least the steps of
- introducing a first and second foil into the foam injection moulding tool;
- applying vacuum to form at least one of the foils against the surface of the moulding tool to obtain the 3 D shape;
- injecting a mixture of at least polyether polyol based blend and isocyanate into the cavity between the first and second foil such that the mixture reacts to create a foam filling the full mould and connecting to the surface of the first and second foil facing the foam mixture;
- curing the foam either before or after opening the moulding tool and demoulding the part formed.

Preferably impervious foils may be used as starting material, to enable the vacuum forming and prevent any foam from being formed outside of the foils.

Preferably directly after the foam is fully formed but not cured yet, the part is subjected to needling through at least one of the foils into the foam. This enables a faster curing of the foam as well as prevent any substantial shrinkage of the part.

Preferably the amount of perforation is kept to a minimum to achieve the goals but reducing any holes than may enable water to get into the part. Preferably one perforation every 40 to 100 mm in both X and Y direction, with hole diameter of around 0.5 to 2 mm. To prevent distortion of the part due to excessive needling, the amount of needling as well as the depth of needling might be reduced in local areas, in particular very thin areas or sloping areas.

Preferably the part may be trimmed and any appliances added where needed.

Around the rim it is advantageous to close the part, by reducing the thickness and create a thin area of both foils just connected together with a layer of foam mixture. In these areas the foam is not necessary containing cells, it might be the cured mixture without cell building. This type of closure can work as a sealing of the part.

Alternatively or together with the perforation any type of venting system may be incorporated in the foil to obtain the same or similar effect as the foil perforation. An advantage would be that the part is closed to environmental conditions like rain and water, but the use of a vent is increasing the cost of the part considerably.

The thus formed part may have a substantial flat side facing the battery cover while the surface facing the floor structure may be 3-D shaped for both filling the gap between the floor structure and the surface of the battery box. This gap might have a variable thickness, defined as the local distance between the surface of the battery box or cover and the surface of the flooring structure perpendicular to the surfaces.

In certain areas the thickness of the outer floor insulator may be larger than the corresponding distance between the 2 surfaces to obtain a compressed part. Preferably the compression of the foam after mounting is not more than 40% based on the height after compression vs the initial height.

Preferably small place holders in the form of for instance holes or taps are integrated in the part, to enable a fitted placement on the battery cover before mounting and reducing any sliding of the part.

Alternatively the part may be glued to the box at least during mounting to prevent sliding. A pressure sensitive glue might be used on one or both surfaces of the outer floor insulator to prevent sliding during mounting and to keep the part on its place. It may also further increase the damping effect of the higher compressed areas.

By using injection moulded foam according to the current invention it is possible to obtain a 3D shaped part with a variable thickness and area weight enabling a constant compression rate over the part what is not possible with the state of the art slab foam parts. In Addition it is possible to create a step change compression rate, by adapting the shape locally to avoid pressure in delicate areas or to increase the pressure in vibrational hot spots.

Preferably the full part is touching both the outer flooring structure and the battery box or cover surfaces, however not the full part is mounted with a substantial compression rate. Preferably the compression rate varies over the surface of outer floor insulator. Whereby the compression rate may be between 0 and 35% preferably in steps.

Hence a main area has a compression rate of 0% or close to 0%, while in local designated areas the compression might be steps of for instance 10%, 20% or 35%.

Areas of compressed foam might dampen vibrational noise of either the battery cover and or the floor structure. Furthermore by using the outer floor insulator or gap filler it is possible to reduce the soiling of the gap, while using compressed foam it is ensured that also after a period in use the part still closes the gap.

Preferably, the foam mixture is based on a polyether polyol blend and Isocyanate. Preferably, a mixture of a Isocyanate Index of below 55 is used.

The blend might comprise water and any additives to obtain a soft and open cell foam. Additives for in particular flammability, colour, or emission reduction among others might be added as well.

Preferably, the average part density of the foam is between 40 and 65kg/m³, preferably between 42-46 kg/m³.

The average part density is the weight of the foam layer divided by the volume of the part.

Due to the injection moulding of the foam mixture there might be local a higher density in the areas of the rim as well as on the surfaces touching and connecting to the foil layers.

The foam may be touching both surfaces at least around the perimeter of the battery cover to create a closed space between both surfaces and the foam ring; this would improve reduction of air borne noise. While the foam ring but also any foam areas within the outer floor insulator that are touching both surfaces will improve reduction of structure borne noise.

The lower surface of the outer floor insulator might have ridges, embossments or gaps to further improve the insulation properties and/ or to create water drainage.

Some holes going through the part might be created to improve water drainage between top and bottom of the outer floor insulator. In addition, the outer floor insulator may be further improved by minimising surface contact, restricting the highly compressed areas to the required hot spot areas with a high vibrational load. For instance by creating a wave cross section through the part whereby either the top, the bottom or both surfaces are 100% in touch with the adjacent layer. This can also further optimise the balance of the compression force needed to install the part and or to needed during use for acoustic insulation.

For an ease of mounting the part may be glued to the surface of the battery cover, and is mounted to the car together with the battery box.

Also clips or pins may be used to keep the part in its correct position upon mounting.

### Description of embodiments

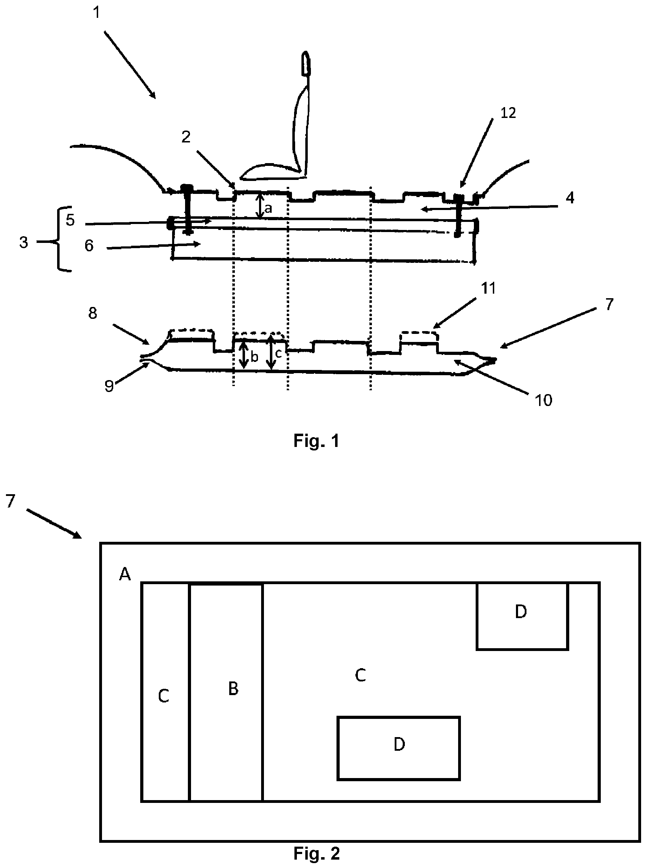

Figure 1 shows schematic a battery electric vehicle 1 with a battery box 3 situated underneath the passenger compartment flooring structure 2. The passenger compartment flooring structure 2, is most of the time build as a metal plate and beam structure to give the car stabile rigid structure. The surface of the flooring structure is therefore not a flat surface but is defined in a 3 D shape depending on the beams and other necessary protrusions.

The battery box in general comprises a lower container element 6 holding the battery cells or modules and a lid or cover 5 to close the container element, forming a closed box 3, which is mounted underneath the flooring structure with means for mounting 12.

The battery box is mounted underneath the flooring structure with a gap 4 between the surfaces. This is to prevent any noise or temperature exchange directly between the lid and flooring structure.

Between the surface of the flooring structure 2 facing the battery box and the surface of the cover or lid 5 facing the flooring structure 2 a gap 4 is formed. This gap has a variable distance between the 2 surfaces indicated with arrow a as an example. Arrow a is indicating the distance or height of the gap at this local area, when the battery box is in its mounted position.

According to the invention, the gap is filled with a gap filler or outer floor insulator 7, which is shaped to fill the full gap. The outer floor insulator in figure 1 is indicated with small dotted lines to indicate the placement of the outer floor insulator inside the gap. The outer floor insulator consists of a first foil layer 8 and a second foil layer 9, enclosing the injected polyurethane foam formed in the 3D structure fitting within the gap 4.

With broken lines the actual height of the outer floor insulator is indicated before it is mounted in the car. Height a on the top drawing is equal to height b on the lower drawing showing the situation of the part when mounted within the gap. Height c is showing the height of the part in that area before mounting showing. This shows an area that is compressed for instance for 10% to fit into the area of the gap. By placing some of the foam in a compressed state, a residual force is kept against both surfaces to obtain a damping of vibrational noises. As shown figure with area 11, the height might be different and is depending on the gap as well as the compression necessary in a certain area.

Preferably a/b is at least 0.9, which is equivalent to 10% compression. As can be seen schematically in the drawing, certain areas may be compressed more and other areas will be minimal compressed. Preferably, the areas that need compression upon mounting the part are evenly distributed over the full part, hence the mounting may be done with substantial equal force at all mounting points.

In those areas where there is a risk of damage and or no need for a compressional force the height of the foam might be equal or slightly higher than the actual gap after mounting.

Figure 2 is showing an outer floor insulator 7 according to the invention with schematically indicated local zones or areas with different compression levels. While without different compression levels the part would already have a 3 shape to fill the gap, the need for a compressional force in certain areas would further increase the height in certain given areas or zones of the part. Figure 2 is showing an example of a possible layout for an outer floor insulator for including different zones with higher compression; hence the height is higher than the final gap at that areas or zone.

Zone a is a periphery zone of the underlying battery cover and may have a higher compression of foam during mounting in the range of 25 to 40% to seal the part and to avoid leakage of dust, dirt, water or noise inside the gap. Preferably, this is the highest compression level for the part, dictating the mounting force needed for mounting the battery box to the flooring structure. As this area is above the walls of the battery box, it is supported more than the middle of the cover or lid and can withstand higher compressional force than the middle of the lid. The height of the foam in the unmounted part is 1.25 to1.4 times the height of the corresponding gap. The actual height might differ over the rim, as the actual gap height might differ.

Zone B may be an area which is very critical for damage and the compression of the foam is reduced to 0% or close to 0% -just touching both surfaces. While the D zones might be areas that are related to vibrational hotspots and need a higher compression level of the foam for instance 20 to 25%.

In the C area there might be an overall requirement for compressional force on a low level, of between 10 and 15%, or no requirement, in which case the level may be reduced to 0% or close to 0% to reduce the amount of foam used in the part.

By the use of different compression levels, in zone or areas, it is possible to further optimise the amount of foam used as well as the compressional force treatment of local hot spots. Hence reducing the weight of the part as well as the risk of any damage, while increasing the effective treatment of vibrational noise requirements.

While in case of a slab foam according to the state of the art the area with the wides gap and the requirements for compressional force in this area would dictate the material thickness used, and the height distribution would dictate the compression levels over the part, hence the highest load might coincide with the weakest areas of the underlying surface of the battery cover. Due to the use of injection foam the shape, the height and therefore the compressional force can be adapted to the local needs, preventing any overloading and damage at weak spots.

## Claims

1. An outer floor insulator for filling the gap between the outer floor surface and the battery box of a battery electric vehicle comprising at least a polyurethane foam layer **characterised in that** it further comprises at least 2 foil layers, whereby the foam layer is an injected foam sandwiched between and materially connected to the foil layers and formed in a 3D shape with a variable area weight and thickness.

2. An outer floor insulator according to claim1, wherein the foam is a soft polyurethane foam with a low compression stress, with a CV₄₀ of between 2.5 and 4.3kPa.

3. An outer floor insulator according to claim one of the preceding claims, wherein the foam has a compressional stress value (CV₂₅) at 25% compression between 1 and 5 kPa, preferably between 1.5 and 4KPa, measured at first cycle according to ISO 3386-1.

4. An outer floor insulator according to one of the preceding claims, wherein the foam has a compressional stress value (CV₅₀) at 50% compression of less than 5.3kPa measured at 5^{th} cycle according to ISO 3386-1.

5. An outer floor insulator according to one of the preceding claims, wherein the polyurethane foam is based on a polyether or polyester type polyol.

6. An outer floor insulator according to one of the preceding claims, wherein the polyurethane foam has an isocyanate index of between 45 and 55, preferably of between 48 and 53.

7. An outer floor insulator according to one of the preceding claims, whereby the foam is mixed of a polyol blend and an isocyanate, preferably with a polyol blend comprising a blend of base polyols of different molecular weight between 500 and 8000 g/mol, preferably between 4500 and 6000 g/mol or between 4500 and 6000 g/mol combined with a base polyol of different molecular weight between 600 and 800 g/mol.

8. An outer floor insulator according to one of the preceding claims, whereby the foil layers may be one chosen from the group of polyurethane, polyolefin, polyester or polyamide based foils, or a combination of such foils.

9. An outer floor insulator according to one of the preceding claims whereby the rim of the part is closed by both foils laminated together with a thin layer of the injected polyurethane.

10. An outer floor insulator according to one of the preceding claims whereby at least one surface is at least partially perforated through the foil and into the foam for at least 5% of its thickness, preferably one perforation every 60 to 100mm in both X and Y direction.

11. Car with at least a floor construction and a battery box mounted beneath the floor construction with a gap between a surface of the floor construction and a surface of the battery box, comprising an outer floor insulator according to one of the preceding claims, whereby the outer floor insulator is placed within the gap and at least part of a first surface of the outer floor insulator is in contact with the surface of the floor construction and at least part of the opposite second surface of the outer floor insulator is in contact with the surface of the battery box.

12. Car with at least a floor construction and a battery box according to claim 11, whereby the floor insulator comprises zones with the thickness of the corresponding gap and/or zones with a thickness of the insulator at least 1.10 times the thickness of the corresponding gap and/or zones with a thickness at least 1.35 times the thickness of the corresponding gap.

13. Car with at least a floor construction and a battery box according to claim 11 or 12, whereby at least around the perimeter of the battery box a zone with a thickness of at least 1.20 time the thickness of the corresponding gap is used to seal the gap.

14. Car with at least a floor construction and a battery box according to claim 11, 12 or 13, whereby the floor insulator is formed such that water can flow freely between at least a part of the floor insulator and the surface of the battery box, preferably at least one channel like gap is formed between floor insulator and surface of the battery box.

15. Method of producing the outer floor insulator or gap filler according to claim 1 to 10 having at least the steps of
- introducing a first and second foil into the foam injection moulding tool;
- applying vacuum to form at least one of the foils against the surface of the moulding tool to obtain the 3 D shape;
- injecting a mixture of at least a polyol based blend and isocyanate into the cavity between the first and second foil such that the mixture reacts to create a foam filling the full mould and connecting to the surface of the first and second foil facing the foam mixture;
- curing the foam either before or after opening the moulding tool and demoulding the part formed.
